Europäisches Patentamt

(19) European Patent Office

Office européen des brevets

(11) Veröffentlichungsnummer : **0 343 323 B1**

(12) **EUROPÄISCHE PATENTSCHRIFT**

(51) Int. Cl.⁵ : **F24H 3/04, F23M 9/06**

(45) Veröffentlichungstag der Patentschrift :
28.08.91 Patentblatt 91/35

(21) Anmeldenummer : 89103576.8

(22) Anmeldetag : 01.03.89

(54) Heisslufterzeuger.

(30) Priorität : 25.05.88 DE 8806824 U

(43) Veröffentlichungstag der Anmeldung :
29.11.89 Patentblatt 89/48

(45) Bekanntmachung des Hinweises auf die
Patenterteilung :
28.08.91 Patentblatt 91/35

(84) Benannte Vertragsstaaten :
DE FR IT NL

(56) Entgegenhaltungen :
DE-A- 1 501 854
GB-A- 2 156 966

(73) Patentinhaber : WALTER KROLL GMBH
Burgstaller Strasse 42
W-7141 Kirchberg/Murr (DE)

(72) Erfinder : Kroll, Walter
Wilhelm-Busch-Strasse 13
W-7150 Backnang (DE)

(74) Vertreter : Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Robert-Koch-Strasse 1
W-8000 München 22 (DE)

EP 0 343 323 B1

Jouve, 18, rue Saint-Denis, 75001 PARIS

**Beschreibung**

Die Erfindung betrifft einen Heißlufterzeuger mit einer Brennkammer und einem Brenner, der auf einer Seite der Brennkammer angeordnet ist, wobei die Brennkammer auf der dem Brenner gegenüberliegenden Seite eine mit Öffnungen für die austretende Heißluft versehene Abschlußwand aufweist.

Heißlufterzeuger dieser Art (z.B. nach der DE-A-1501854) werden für die verschiedensten Zwecke eingesetzt und je nach Anforderung an die Heizleistung in den unterschiedlichsten Dimensionen hergestellt. Sie können mit festen, flüssigen oder gasförmigen Brennstoffen betrieben werden, wobei es bei einigen Heißlufterzeugern auch möglich ist, verschiedene Brennstoffarten zu verwenden.

Wesentliche Anforderungen an solche Heißlufterzeuger sind ein möglichst hoher Wirkungsgrad, hohe Wirtschaftlichkeit, Betriebssicherheit sowie weitgehende Geruchsfreiheit auch bei längerem Betrieb. Mit bekannten Heißlufterzeuger sind diese Forderungen nur in ungenügendem Maße zu erfüllen.

Der Erfindung liegt daher die Aufgabe zugrunde, auf möglichst einfache Weise den Wirkungsgrad von Heißlufterzeugern zu erhöhen und die Geruchsentwicklung zu verringern.

Diese Aufgabe wird dadurch gelöst, daß die Abschlußwand aus einem Glühblech und einem auf der dem Brenner zugewandten Seite des Glühblechs angeordneten Glühgitter besteht.

Durch die Anordnung eines Glühgitters in Strömungsrichtung vor einem Glühblech werden die aus der Brennkammer austretenden, noch unverbrauchten Gase durch das Glühgitter schon vor dem Glühblech in Turbulenzen versetzt, wodurch eine gleichmäßige und intensive Beaufschlagung des Glühbleches erfolgt. Dies bewirkt auf eine sehr einfache Weise eine verbesserte Verbrennung der Abgase und damit eine Erhöhung des Wirkungsgrads und Verminderung der Geruchsentwicklung.

Da das Glühgitter durch die heißen Gase ebenfalls zum Glühen gebracht wird, erhöht sich außerdem die wärmeabstrahlende Oberfläche der Außenwand, ohne daß die Öffnungen des Glühblechs sehr klein und deren Anzahl gering gehalten werden muß, was eine unerwünschte Behinderung des Heißluftstroms zur Folge hätte.

Die dadurch erzielte Erhöhung der Wärmestrahlung trägt zu einer Erhöhung des Wirkungsgrads des Heißlufterzeugers bei und beeinflußt positiv das subjektive Wohlbefinden. Darüber hinaus werden durch das Glühgitter Wärmenester auf dem Glühblech vermieden, was eine Steigerung der Lebensdauer dieses Glühblechs zur Folge hat.

Vorteilhafte Ausführungsformen der Erfindung sind aus den Unteransprüchen ersichtlich. In der Zeichnung ist ein Ausführungsbeispiel der Erfindung dargestellt. Es zeigt :

Figur 1  eine teilweise schematische Seitenansicht eines erfindungsgemäßen Heißlufterzeugers,
Figur 2  eine Frontansicht des auf dem Glühblech montierten Glühgitters von der Innenseite der Brennkammer her,
Figur 3  eine Seitenansicht von Figur 2,
Figur 4  eine Frontansicht des erfindungsgemäßen Glühblechs mit einem Teil der darin angeordneten Schlitze vor dem Hochbiegen des äußeren Glühblechrandes.

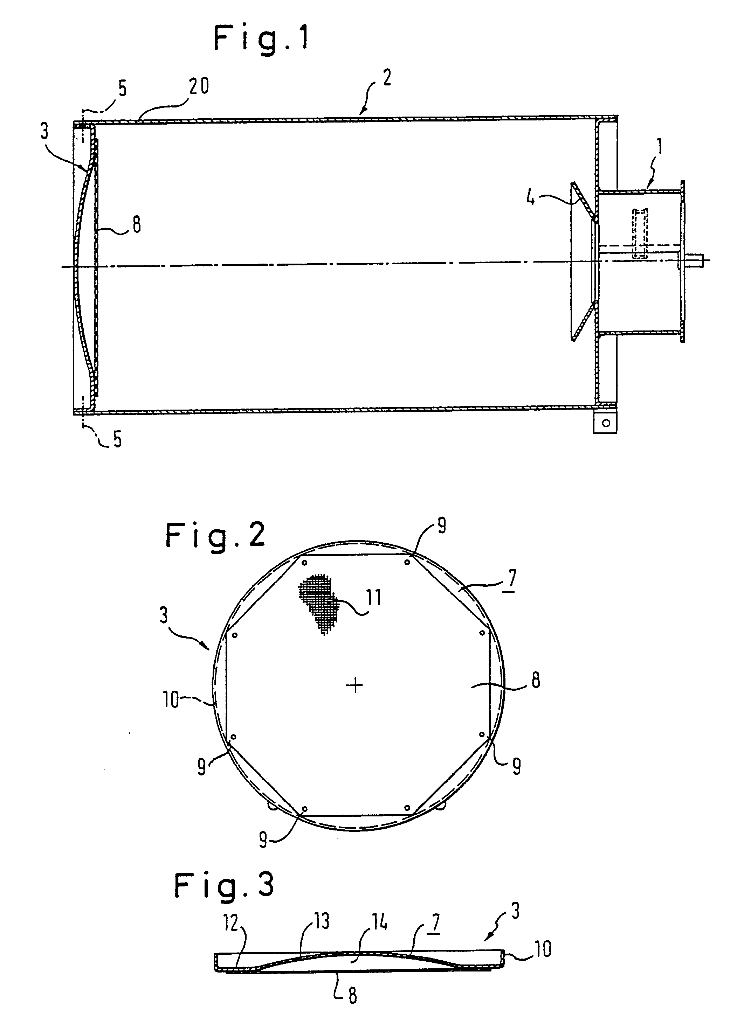

Ein in Figur 1 dargestellter Heißlufterzeuger ist als direkt befeuerter Ölheizer ausgebildet und besteht im wesentlichen aus einem Brenner (1), einer zylinderförmigen Brennkammer (2) und einer Abschlußwand (3).

Der Brenner (1) ist auf einer Stirnseite der Brennkammer (2) vorgesehen und mündet über einen sich erweiternden Einströmtrichter (4) in die Brennkammer.

Die Abschlußwand (3) ist auf der dem Brenner (1) gegenüberliegenden Stirnseite der Brennkammer (2) angeordnet und mit lediglich schematisch angedeuteten Schrauben (5) an einer Außenwand (3) der Brennkammer befestigt.

Wie aus den Figuren 2 und 3 ersichtlich ist, besteht die Abschlußwand (3) aus einem Glühblech (7) und einem ebenen Glühgitter (8) von der Form eines regelmäßigen Achtecks, das in der Nähe seiner Ecken (9) mit dem Glühblech (7) durch Punktschweißen verbunden ist. Statt Punktschweißen sind jedoch auch andere Befestigungsverfahren, z.B. Nieten oder Schrauben, möglich.

Das Glühgitter (8) ist zentrisch auf dem Glühblech (7) befestigt und so bemessen, daß seine Ecken (9) bis zum Rand (10) des Glühblechs (7) reichen, aber sich nicht über diesen hinaus erstrecken, um das Einschieben der fertigen Abschlußwand (3) in die Brennkammer (2) nicht zu behindern. Wie andeutungsweise aus Figur 2 ersichtlich ist, weist das Glühgitter (8) eine relativ engmaschige Gitterstruktur (11) auf.

Das Glühblech (7) hat gemäß der Darstellung in Figur 3 die Form eines im Querschnitt kreisförmigen, flachen Bechers, dessen Rand (10) senkrecht bezüglich eines Randbereichs (12) des Becherbodens hochgebogen ist. An dem Randbereich (12) schließt sich ein Zentralbereich (13) an, der in Richtung der Becheröffnung konvex gewölbt ist.

Das Glühgitter (8) ist auf der der Becheröffnung gegenüberliegenden Seite des Glühbechers (7) angeord-

2

net, so daß zwischen dem gewölbten Zentralbereich (13) des Glühblechs (7) und dem ebenen Glühgitter (8) ein Zwischenraum (14) gebildet wird. Das Glühgitter (8) liegt dabei nur am Randbereich (12) des Glühblechs (7) auf diesem auf.

Wie Figur 1 zeigt, wird das Glühblech (7) zusammen mit dem Glühgitter (8) so in die stirnseitige Öffnung der Brennkammer (2) eingesetzt, daß die konvexe Wölbung des Glühblechs nach außen zeigt und damit das Glühgitter (8) auf der dem Brenner (1) zugewandten Seite des Glühblechs (7) angeordnet ist.

Es ist auch möglich, das Glühgitter (8) nicht direkt am Glühblech (7) zu befestigen, sondern in einem bestimmten Abstand vor dem Glühblech (7) innerhalb der Brennkammer (2) anzuordnen. Außerdem muß die Abschlußwand (3) nicht wie in Figur 1 gezeigt, am stirnseitigen Ende der Brennkammerwandung angeordnet sein, sondern kann weiter in Richtung des Brenners (1) in die Brennerkammer (2) eingeführt und dort befestigt werden.

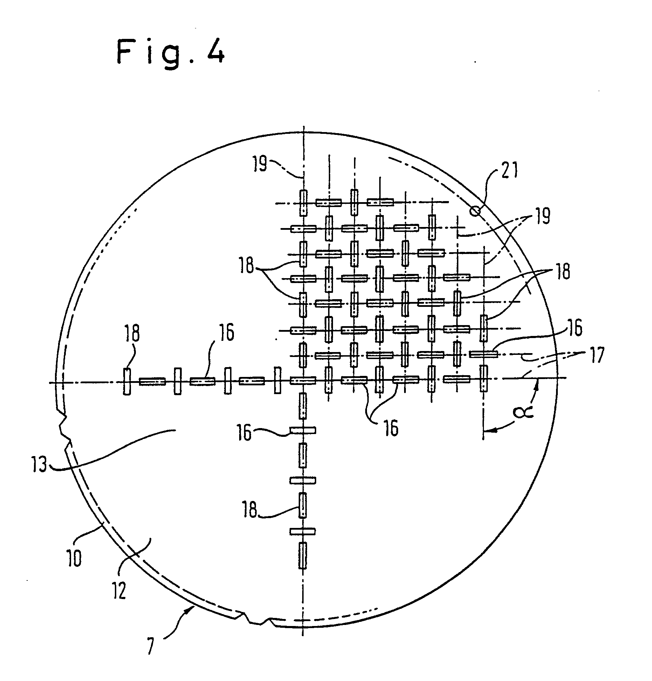

Aus Figur 4 ist das Glühblech (7) ersichtlich, bevor der Rand (10) senkrecht zum Randbereich (12) hochgebogen wird. Im Zentralbereich (13) sind längliche, im wesentlichen rechteckige Schlitze (16,18) von gleicher Größe in das Glühblech, z.B. durch Stanzen, eingebracht. Die Schlitze (15) sind so angeordnet, daß die Längsachsen eines Teils der Schlitze (16) auf zueinander parallelen, ersten Linien (17) und die Längsachsen eines anderen Teils der Schlitze (18) auf zueinander parallelen, zweiten Linien (19) verlaufen, die die ersten Linien (17) in einem Winkel ($\alpha$) von 90 Grad schneiden.

Jeder Schnittpunkt der gekreuzten Linien (17,19) bildet die Mitte eines Schlitzes (16,18), wobei auf benachbarten Schnittpunkten jeweils verschieden ausgerichtete Schlitze (16,18) angeordnet sind.

Der Abstand der Schlitze (16,18) voneinander ist so bemessen, daß sie sich gegenseitig nicht berühren. Außerdem ist die Maschenweite des durch die gekreuzten Linien (17,19) gebildeten Gitters wesentlich größer als die Maschenweite des Glühgitters (8).

Es ist auch möglich, anstelle von rechteckigen Schlitzen anders gestaltete Öffnungen, z.B. kreis-, rauten- oder oval-förmige Öffnungen zu verwenden.

Für die Aufnahme der Schrauben (5) zur Befestigung des Glühblechs (7) an der Außenwand (3) an der Brennkammer (2) sind im Rand (10) des Glühblechs (7) Bohrungen (21) regelmäßig über den Umfang verteilt angeordnet. Diese Bohrungen (21) können als glatte Durchgangsbohrung ausgebildet oder mit einem Gewinde versehen sein.

## Patentansprüche

1. Heißlufterzeuger mit einer Brennkammer und einem Brenner, der auf einer Seite der Brennkammer angeordnet ist, wobei die Brennkammer auf der dem Brenner gegenüberliegenden Seite eine mit Öffnungen für die austretende Heißluft versehene Abschlußwand aufweist, dadurch **gekennzeichnet,** daß die Abschlußwand (3) aus einem Glühblech (7) und einem auf der dem Brenner (1) zugewandten Seite des Glühblechs (7) angeordneten Glühgitter (8) besteht.

2. Heißlufterzeuger nach Anspruch 1, dadurch **gekennzeichnet,** daß die Öffnungen des Glühblechs (7) aus in einem regelmäßigen Muster angeordneten rechteckigen, rautenförmigen oder ovalen Schlitzen (16, 18) bestehen.

3. Heißlufterzeuger nach Anspruch 2, dadurch **gekennzeichnet,** daß die Längsachse eines Teils der Schlitze (16) auf zueinander parallelen, ersten Linien (17) und die Längsachsen eines anderen Teils der Schlitze (18) auf zueinander parallelen, zweiten Linien (19) verlaufen, die die ersten Linien (17) in einem bestimmten Winkel ($\alpha$) schneiden, wobei jeder Schnittpunkt die Mitte eines Schlitzes (16, 18) bildet und auf benachbarten Schnittpunkten jeweils verschieden ausgerichtete, vorzugsweise gleiche Größe aufweisende Schlitze (16, 18) angeordnet sind, die so bemessen sind, daß sie sich gegenseitig nicht berühren.

4. Heißlufterzeuger nach Anspruch 3, dadurch **gekennzeichnet,** daß die ersten Linien (17) und die zweiten Linien (19) jeweils in einem regelmäßigen Abstand angeordnet sind und daß der Abstand zwischen den ersten Linien (17) gleich dem Abstand zwischen den zweiten Linien (19) ist.

5. Heißlufterzeuger nach Anspruch 1, dadurch **gekennzeichnet,** daß die Öffnungen des Glühbleches (7) kreisförmigen Querschnitt haben.

6. Heißlufterzeuger nach einem der Ansprüche 2 bis 5, dadurch **gekennzeichnet,** daß die Öffnungen bzw. Schlitze (16, 18) nur in einem Zentralbereich (13) des Glühbleches (7) der zu der dem Brenner (1) abgewandten Seite hin konvex oder konkav gewölbt ist, angeordnet sind, während ein Randbereich (12) keine Öffnungen bzw. Schlitze (16, 18) aufweist.

7. Heißlufterzeuger nach einem der vorhergehenden Ansprüche, dadurch **gekennzeichnet,** daß das Glühgitter (8) eben ist.

8. Heißlufterzeuger nach einem der vorhergehenden Ansprüche, dadurch **gekennzeichnet,** daß das Glühgitter (8) eine wesentlich geringere Maschenweite als das durch die sich kreuzenden ersten und zweiten Linien (17, 19) gebildete Gitter aufweist.

9. Heißlufterzeuger nach einem der vorhergehenden Ansprüche, dadurch **gekennzeichnet,** daß das vorzugsweise eine achteckige Außenkontur aufweisende Glühgitter (8) mit dem Glühblech (7) an dessen Randbereich (12) fest, beispielsweise durch Nieten, Verstemmen, Schrauben oder Schweißen verbunden ist.

10. Heißlufterzeuger nach einem der vorhergehenden Ansprüche, dadurch **gekennzeichnet,** daß das Glühblech (7) einen abgewinkelten, umlaufenden Rand (10) aufweist, der im montierten Zustand parallel zu einer Außenwand (20) der Brennkammer (2) verläuft, und daß das Glühblech (7) an diesem Rand (10) mit der Außenwand (20) lösbar verbunden ist.

## Claims

1. Hot air generator comprising a combustion chamber and a burner arranged at one side of the combustion chamber, the combustion chamber having on the side opposite the burner a terminal wall provided with openings for the exiting hot air, characterized in that the terminal wall (3) comprises a glow plate (7) and a glow grating (8) arranged on the side of the glow plate (7) facing the burner (1).

2. Hot air generator according to claim 1, characterized in that the openings of the glow plate (7) consist of rectangular, diamond-shaped, or oval slits (16, 18) arranged in a regular pattern.

3. Hot air generator according to claim 2, characterized in that the longitudinal axes of a portion of the slits (16) extend on mutually parallel first lines (17) and the longitudinal axes of another portion of the slits (18) extend on mutually parallel second lines (19) which intersect the first lines at a determined angle (a), wherein each intersection point forms the center of a slit (16, 18), and wherein respective differently orientated slits (16, 18) having preferably the same size are arranged on neighbouring intersection points and being sized such that they do not contact each other.

4. Hot air generator according to claim 3, characterized in that the first lines (17) and the second lines (19) are respectively arranged at regular spacings ; and in that the spacing between the first lines (17) is equal to the spacing between the second lines (19).

5. Hot air generator according to claim 1, characterized in that the openings of the glow plate (7) have circular cross-sections.

6. Hot air generator according to one of claims 2 to 5, characterized in that the openings or slits (16, 18) are only arranged in a central region (13) of the glow plate (7), which region is curved concavely or convexly towards the side remote from the burner (1), while a border region (12) has no openings or slits (16, 18).

7. Hot air generator according to one of the preceding claims, characterized in that the glow grating (8) is planar.

8. Hot air generator according to one of the preceding claims, characterized in that the glow grating (8) has a mesh width substantially smaller than the grid formed by the first and second lines (17, 19) crossing each other.

9. Hot air generator according to one of the preceding claims, characterized in that the glow grating (8) preferably has an octagonal outline and is firmly connected to the glow plate (7) at its border region (12), for example by riveting, crimping, screwing or welding.

10. Hot air generator according to one of the preceding claims, characterized in that the glow plate (7) has an angled peripheral border (10) which extends in the assembled state parallel to an outer wall (20) of the combustion chamber (2) ; and in that the glow plate (7) is releasably connected to the outer wall (20) at this border (10).

## Revendications

1. Générateur d'air chaud comprenant une chambre de combustion et un brûleur agencé sur le côté de la chambre de combustion, celle-ci comportant du côté opposé au brûleur une paroi de fermeture pourvue d'ouvertures pour l'air chaud sortant, caractérisé en ce que la paroi de fermeture (2) consiste en une tôle incandescente (7) et en une grille incandescente (8) agencée du côté de la tôle incandescente (7) dirigé vers le brûleur (1).

2. Générateur d'air chaud selon la revendication 1, caractérisé en ce que les ouvertures de la tôle incandescente (7) consistent en des fentes (16, 18) rectangulaires, en losange ou ovales arrangées suivant un motif régulier.

3. Générateur d'air chaud selon la revendication 2, caractérisé en ce que les axes longitudinaux d'une partie des fentes (16) s'étendent suivant des premières lignes (17) parallèles entre elles, et les axes longitudinaux d'une autre partie des fentes (18) s'étendent suivant des secondes lignes (19) parallèles entre elles, qui coupent les premières lignes (17) sous un angle déterminé (a), chaque point d'intersection formant le centre d'une fente (16, 18), et des fentes (16, 18) respectivement dirigées différemment et ayant de préférence de la même taille étant agencées aux points d'intersection voisins, lesdites fentes ayant des dimensions telles qu'elles ne viennent pas en contact les unes avec les autres.

4. Générateur d'air chaud selon la revendication 3, caractérisé en ce que les premières lignes (17) et les secondes lignes (19) sont agencées suivant des écartements réguliers respectifs, et en ce que l'écartement entre les premières lignes est égal à l'écartement entre les secondes lignes (19).

5. Générateur d'air chaud selon la revendication 1, caractérisé en ce que les ouvertures de la tôle incandescente (7) ont une section circulaire.

6. Générateur d'air chaud selon l'une des revendications 2 à 5, caractérisé en ce que les ouvertures ou fentes (16, 18) ne sont agencées que dans une région centrale (13) de la tôle incandescente (7) qui est incurvée de manière convexe ou concave vers le côté éloigné du brûleur (1), tandis qu'une région de bordure (12) ne comporte aucune ouverture ou fente (16, 18).

7. Générateur d'air chaud selon l'une des revendications précédentes, caractérisé en ce que la grille incandescente (8) est plane.

8. Générateur d'air chaud selon l'une des revendications précédentes, caractérisé en ce que la grille incandescente (8) a une largeur de maille notablement plus faible que la trame formée par les premières et secondes lignes (17, 19) qui se croisent.

9. Générateur d'air chaud selon l'une des revendications précédentes, caractérisé en ce que la grille incandescente (8), qui a de préférence un contour extérieur octogonal, est solidement fixée à la tôle incandescente (7) dans sa région de bordure (12), par exemple par rivetage, sertissage, vissage ou soudage.

10. Générateur d'air chaud selon l'une des revendications précédentes, caractérisé en ce que la tôle incandescente (7) comporte une bordure périphérique (10) repliée, qui s'étend à l'état assemblé parallèlement à une paroi extérieure (20) de la chambre de combustion (2), et en ce que la tôle incandescente (7) est fixée de façon démontable à la paroi extérieure (20) par cette bordure (10).

# Fig.1

# Fig.2

# Fig.3

# Fig. 4